# EUROPEAN PATENT SPECIFICATION

(11) **EP 3 568 798 B1**
(45) Date of publication and mention of the grant of the patent: **08.07.2020**
(21) Application number: 18700406.4
(22) Date of filing: 10.01.2018
(51) Int. Cl.: G06F 21/62, H04L 9/08

(54) **DATA FILING METHOD AND SYSTEM**
DATENSPEICHERUNGSVERFAHREN UND -SYSTEM
MÉTHODE ET SYSTÈME DE STOCHAGE DE DONNÉES

(30) Priority: 10.01.2017 EP 17305025
(43) Date of publication of application: 20.11.2019
(73) Proprietor: BMI System, 92120 Montrouge (FR)
(72) Inventor: GEYSERMANS, Francis, 92120 Montrouge (FR); CLERC, Laurent, 92120 Montrouge (FR)
(74) Representative: den Braber, Gérard Paul
(86) International application number: PCT/EP2018/050599
(87) International publication number: WO 2018/130593

(56) References cited:
- US-A1- 2006 224 902
- US-A1- 2009 052 664
- US-A1- 2014 281 514
- US-A1- 2014 372 393

## Description

### FIELD OF THE INVENTION

An aspect of the invention relates to a method of data filing. The method may be used, for example, for filing data elements that comprise personal data. The method may be used in, for example, so-called customer relationship management systems, enterprise resource planning systems, and content management systems, usually designated by the acronyms CRM, ERP, and CMS, respectively. Other aspects of the invention relate to a data filing system and a computer program.

### BACKGROUND OF THE INVENTION

A data filing system may comprise personal data. Personal data is understood to be data directly or indirectly relating to a person who has a so-called right to be forgotten. That is, the person has the right that his or her personal data should no longer be accessible and no longer be retrievable from the data filing system after a certain date, at least not by a person other than him of herself. One way of respecting the right to be forgotten is to delete the personal data from the data filing system after the date concerned.

Patent publication US 2005/0105719 A1 describes a personal information controlling system that limits use of personal information stored in a storage device. In this system, a privacy policy for each piece of personal information is controlled in connection with a specified available period in which a user of the personal information is allowed to use the personal information. The privacy policy is information specifying the available period. A cipher key is acquired for a cipher that can be deciphered by an administrator of the privacy policy and that cannot be deciphered by the user of the personal information. The cipher key is used to cipher the personal information so that the user cannot use the personal information if the available period specified by the privacy policy has expired.

Patent publication US 2014/0372393 A1 describes a method of archiving data in which a data archiving computer system encrypts each data file received for storage with a respective unique encryption key. The data archiving computer system may delete one or more data files by deleting the respective unique encryption keys of each data file.

### SUMMARY OF THE INVENTION

There is a need for a data filing technique that allows respecting the right to be forgotten in a better way.

In order to better address this need, in accordance with an aspect of the invention as defined in claim 1, a method of data filing comprises:
- a data reception step in which a data filing system receives a data element to be included in a data file;
- a data classification step in which the data filing system determines whether the data element is susceptible to comprise a personal data, or not; the data element being subjected to a time-restricted accessibility process if the data element is susceptible to comprise personal data, the time-restricted accessibility process comprising:
- an expiry date assignment step in which the data filing system assigns an expiry date to the data element;
- a key assignment step in which the data filing system randomly assigns an encryption key to the data element so as to avoid that the encryption key is assigned to another data element in the data filing system;
- a key storage step in which the data filing system internally stores the encryption key in association with the expiry date that has been defined;
- a data encryption step in which the data filing system encrypts the data element on the basis of the encryption key so as to obtain an encrypted data element;
- a data inclusion step in which the data filing system includes the encrypted data element in the data file; and
- a key deletion step in which the data filing system deletes the encryption key when the expiry date associated with the encryption key is reached,
the data element being included in the data file without applying the time-restricted accessibility process if the data element is not susceptible to comprise personal data, so that the data element remains accessible as long as the data file remains accessible.

In accordance with other aspects of the invention, a computer program and a data filing system are provided as defined in claims 14 and 15, respectively.

In each of these aspects, the right to be forgotten can be respected while ensuring data integrity of a data file. Data integrity can be ensured because a data element, which may comprise personal data, need not be erased. The data element, which is stored in an encrypted form, is rendered inaccessible by deleting an encryption key that allows obtaining the data element in the clear. The data element may thus remain present in the encrypted form, even after a certain date, an expiry date, which is determined by the right to be forgotten. This can be advantageous in a data filing system that keeps an audit trial with regard to data elements filed in the data filing system.

For the purpose of illustration, some embodiments of the invention are described in detail with reference to accompanying drawings. This description will present features additional to those mentioned hereinbefore, as well as advantages which these additional features can provide;

### BRIEF DESCRIPTION OF THE DRAWINGS

FIG. 1 is a block diagram of a data filing system.
FIG. 2 is a table diagram of a data file in the data filing system.
FIG. 3 is a table diagram of an encryption key table in the data filing system.
FIG. 4 is a table diagram of an expiry date table in the data filing system.
FIG. 5 is a table diagram of an audit trail record in the data filing system.
FIG. 6 is a flow chart diagram of a data filing session in a method of data filing, which involves the data filing system.
FIG. 7 is a flow chart diagram of a key management process in the method of data filing.
FIG. 8 is a flow chart diagram of a data read session in the method of data filing.

### DESCRIPTION OF SOME EMBODIMENTS

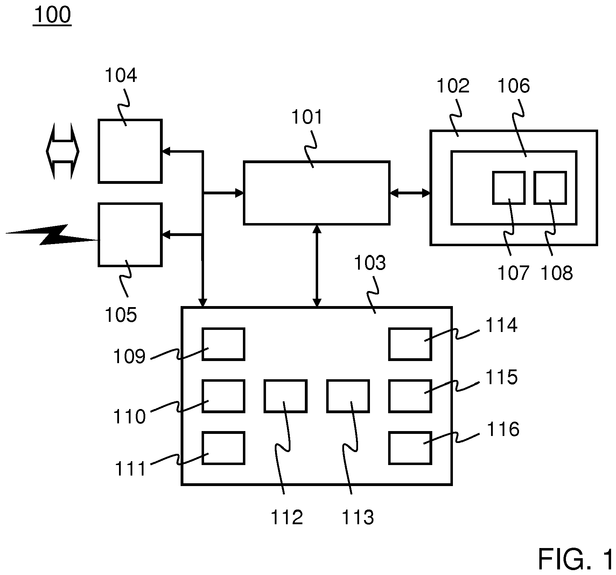

FIG. 1 schematically illustrates a data filing system 100. The data filing system 100 is represented in a block diagram. The data filing system 100 may be in the form of, for example, a server that can be accessed via a network, such as, for example, the Internet or a local area network, or both. The data filing system 100 may constitute, or form part of, for example, a so-called customer relationship management system, an enterprise resource planning system, or an content management system, usually designated by the acronyms CRM, ERP, and CMS, respectively.

The data filing system 100 comprises a processor 101, a program memory 102, a data memory 103, a user interface 104, and a communication interface 105. The program memory 102 may be composed of various data storage devices, such as, for example, one or more memory circuits, or one or more magnetic disks, or a combination of these. The same applies to the data memory 103. The user interface 104 may comprise, for example, a data entry device, which may be in the form of a keyboard, and a data display device. The communication interface 105 may be coupled to the Internet or the local area network, or both.

In more detail, the program memory 102 comprises a data filing software program 106, which includes a key generation module 107, and a key management module 108. The data filing software program 106 comprises a set of instructions that the processor 101 may carry out. This enables the data filing system 100 to carry out operations that will be described in greater detail hereinafter.

The data memory 103 may comprise various data files 109, 110, 111, an encryption key table 112, an expiry delay table 113, and various audit trail records 114, 115, 116. These data entities will be described in greater detail hereinafter. For illustration and simplicity, FIG. 1 illustrates three data files 109, 110, 111, and three audit trail records 114, 115, 116, only. The data memory 103 may comprise more or less of these data entities. The data memory 103 may also comprise at least one further encryption key table and at least one further expiry delay table in addition to the encryption key table 112 and the expiry delay table 113, respectively, illustrated in FIG. 1.

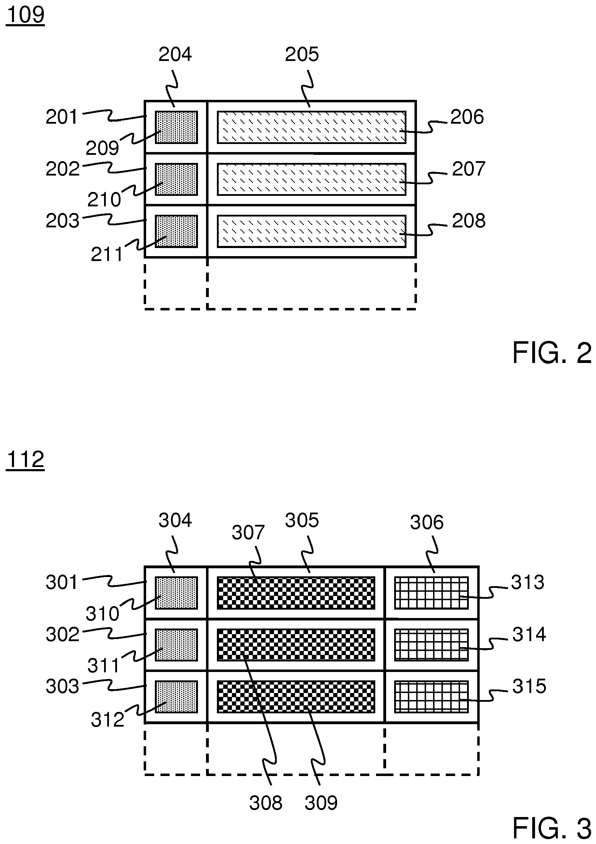

FIG. 2 schematically illustrates a data file 109 in the data filing system 100. The data file 109 is represented in a table diagram, which comprises various lines 201, 202, 203 and various columns 204, 205. The data file 109 comprises various encrypted data elements 206, 207, 208, which are represented in a right-hand column 205. An encrypted data element may be an encrypted version of a data element that has been received by the filing system for filing in the data file 109. An encrypted data element may be an encrypted version of a link to another encrypted data element that is present in the data filing system 100.

For example, the data file 109 may relate to a contract. In this example, an encrypted data element may be an encrypted version of a surname, or a given name, or both, of a person who is party to the contract. Alternatively, the encrypted data element may be an encrypted version of a link to an encrypted version of a surname, or a given name, or both, of that person present in the data filing system 100. In the first case, the encrypted data element is a direct definition, in an encrypted form, of the person who is party to the contract. In the latter case, the encrypted data element is an indirect definition, by reference, in an encrypted form, of that person. In either case, the encrypted version of the data element has been obtained on the basis of an encryption key, which may uniquely be associated with the data element.

The data file 109 further comprises various identifiers 209, 210, 211, which are represented in a left-hand column 204. An identifier and a data element that are in a same line of the table diagram may uniquely be associated with each other. Other data files 110, 111 in the data filing system 100 may be similar to the data file 109 illustrated in FIG. 2 and described hereinbefore.

FIG. 3 schematically illustrates the encryption key table 112. The encryption key table 112 is represented in a table diagram, which comprises various lines 301, 302, 303 and various columns 304, 305,306. The encryption key table 112 comprises various encryption keys 307, 308, 309, which are represented in a middle column 305. An encryption key has been used to obtain an encrypted version of a data element that has been received by the data filing system 100 for filing in the data file 109. The encryption key table 112 further comprises various identifiers 310, 311, 312, which are represented in a left-hand column 304. An identifier and an encryption key that are in the same line of the table diagram may uniquely be associated with each other.

An identifier in the encryption key table 112, which is associated with an encryption key in this table, may also occur in a data file 109, 110, 111. In the data file concerned, the identifier is associated with a data element of which an encrypted version is present in the data file. The encrypted version has been obtained on the basis of the encryption key because both are associated with the same identifier. Conversely, an identifier in a data file 109, 110, 111, which is associated with an encrypted version of a data element in this file, may also occur in the encryption key table 112. In the encryption key table 112, the identifier is associated with an encryption key. The encryption key has been used to obtain the encrypted version of the data element because both are associated with the same identifier. An encryption key and a data element can thus be associated with each other if the encryption key and an encrypted version of the data element are associated with a same identifier.

The encryption key table 112 further comprises various expiry dates 313, 314, 315, which are represented in a right-hand column 306. An expiry date and an encryption key that are in the same line of the table diagram may uniquely be associated with each other. The expiry date indicates when the encryption key should be deleted from the data filing system 100.

The data filing system 100 may protect the encryption key table 112 against unauthorized access. For example, data filing system 100 may encrypt the encryption key table 112 itself on the basis of a table encryption key. For greater security, the table encryption key may be repeatedly renewed over time, in a regular or random fashion. The encryption key table 112 may be comprised in a part of the data memory 103 that is physically protected against unauthorized access.

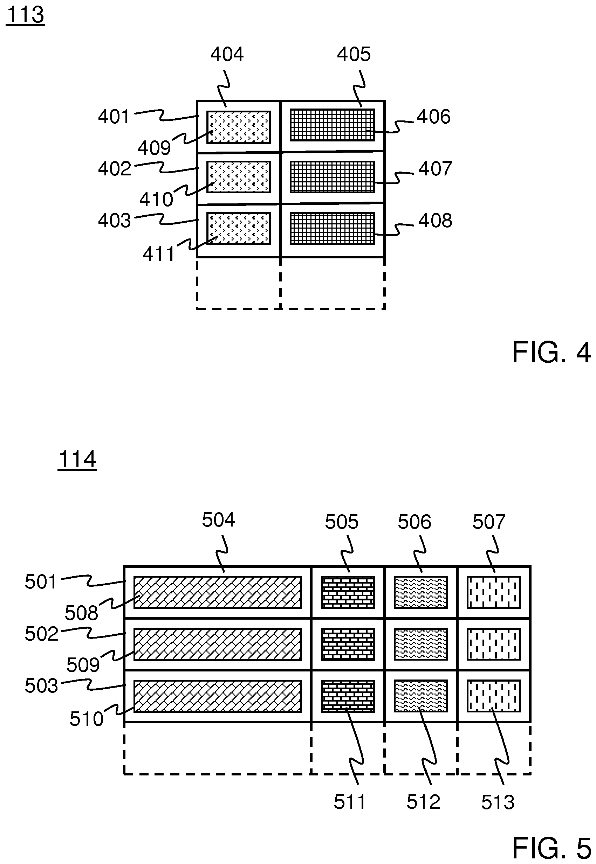

FIG. 4 schematically illustrates the expiry delay table 113. The expiry delay table 113 is represented in a table diagram, which comprises various lines 401, 402, 403 and various columns 404, 405. The expiry delay table 113 comprises various expiry delays 406, 407, 408, which are represented in a right-hand column 405. The data file 109 further comprises various definitions of categories of data elements 409, 410, 411, which are represented in a left-hand column 404. An expiry delay and a definition of a data element category that are in a same line of the table diagram may uniquely be associated with each other. The expiry delay indicates a delay after which a data element belonging to the category concerned should not longer be readable from the data filing system 100.

A data element category may be defined on the basis of, for example a country to which the data element relates. As other example, a data element category may be defined on the basis of a type of information that the data element comprises, such as, for example, a name of a person, an address of that person, a date of birth of that person, or a physician of that person. As yet another example, a data element category may be defined on the basis of an intended use of the data element.

FIG. 5 schematically illustrates an audit trail record 114 in the data filing system 100. The audit trail record 114 is represented in a table diagram, which comprises various lines 501, 502, 503 and various columns 504, 505, 506, 507. The audit trail record 114 may uniquely be associated with a data file, such as, for example, .the data file 109 illustrated in FIG. 2. In this example, the audit trail record 114 comprises various encrypted versions 508, 509, 510 of the data elements that also are present in the data file 109 with which the audit trail record 114 is associated. The encrypted versions 508, 509, 510 of the data elements are represented in a left-hand column 504. The audit trail record 114 may also comprise identifiers similar to those in the data files 109, 110, 112 and the encryption key table 112 described hereinbefore.

The audit trail record 114 may further comprise various filing context indications 511, 512, 513 for a data element. In the table diagram of FIG. 5, a filing context indication is represented in a column and may be associated with a data element of which the encrypted version is in a same line as the filing context indication. For example, a left-middle column 505 may comprise an indication 511 of when the method of filing was applied to the data element. A right-middle column 506 may comprise an indication 512 of how the data element was received. A right-hand column 507 may comprise an indication 513 of who initiated the method of filing. Other audit trail records 115, 116 in the data filing system 100 may be similar to the audit trail record 114 illustrated in FIG. 5 and described hereinbefore.

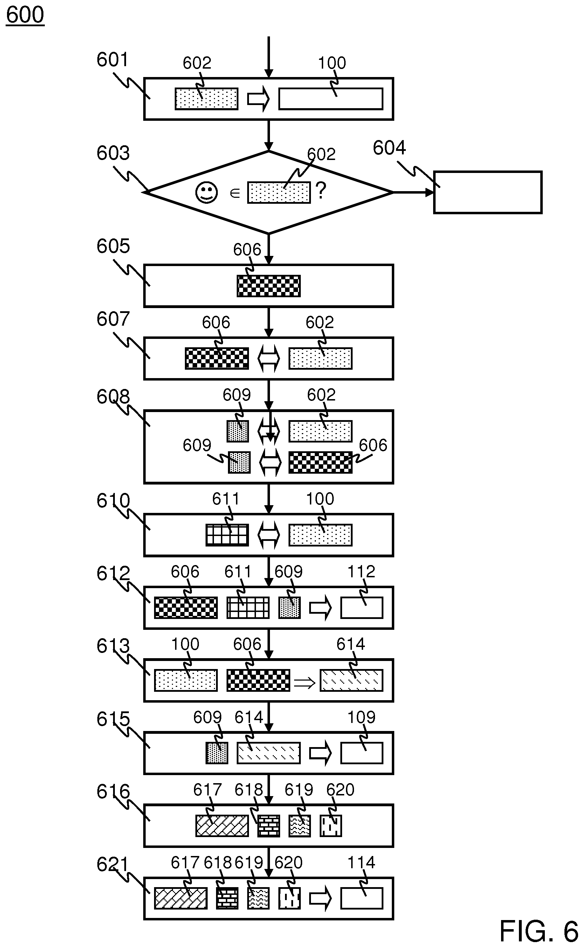

FIGS. 6, 7, and 8 schematically illustrates a method of data filing. The method is illustrated in flow chart diagrams. The method comprises a series of steps that the data filing system 100 carries out when the processor 101 executes the data filing software program 106. The flow chart diagrams may be regarded as a representation of at least a part of the data filing software program 106 in the program memory 102.

FIG. 6 schematically illustrates a data filing session 600 in the method of data filing. A remote device that is in communication with the data filing system 100 may initiate such a data filing session 600. The remote device may communicate with the data filing system 100 through a network, such as, for example, the Internet. In the data filing session 600, the remote device may operate as a client device, while the data filing system 100 operates as server. The data filing session 600 may comprise the following steps.

In a data reception step 601, the data filing system 100 receives a data element 602 to be included in a data file, such as, for example, the data file 109 illustrated in FIG. 2. The data filing system 100 may receive the data element 602 from the aforementioned remote device. The data filing system 100 may provide a web page that the remote device can display. The web page may comprise a form with various fields. A user of the remote device may then specify the data element in a field.

For example, if the data file in question concerns a contract, there may be a field, or several fields, for the surname and the given name of a person who is party to the contract. The user may then directly specify the name and the surname by entering a string of alphanumerical characters in the field. This may be the case if, for example, the person has not yet been defined in the data filing system 100. Alternatively, the user may select the name and the surname from a list of names that is displayed. Such a list may appear as suggestions when the user starts entering the string of alphanumerical characters in the field concerned, whereby the list displays names that are already present in the data filing system 100.

The data filing system 100 may thus receive the data element 602 in the form of a string of alphanumerical characters or in the form of a link, a reference, to a string of alphanumerical characters, or another type of data element, that is already present in the data filing system 100..The data filing system 100 may receive the data element 602 as part of a data stream that is directed to the data filing system 100. The data stream may be in an XML format.

The data filing system 100 may receive the data element 602 in the form of a data object, which may also comprise a definition of an expiry date for the data element 602. The definition of an expiry date may be in the form of, for example, metadata. The expiry date indicates when the data element should no longer be accessible. Alternatively, the data filing system 100 may receive the data element 602 without any explicit indication of an expiry date.

In a data assessment step 603, the data filing system 100 assesses whether the data element 602 that has been received is susceptible to comprise personal data, or not. Personal data is understood to be data directly or indirectly relating to a person who has a right to be forgotten. There are various manners in which the data filing system 100 can assess whether the data element 602 is susceptible to comprise personal data, or not. For example, in case the data filing system 100 receives the data element 602 in association with an expiry date, as indicated hereinbefore, the data filing system 100 may directly assess that the data element 602 comprises personal data.

The data filing system 100 may provide a webpage comprising a form with various fields as described hereinbefore. In that case, one or more fields may be destined for specifying personal data, whereas one or more other fields may be destined for specifying non-personal data. The data filing system 100 can then assess whether the data element 602 comprises personal data, or not, on the basis of the field concerned from which the data element 602 originates. As another example, the data filing system 100 can make such an assessment on the basis of descriptive data associated with the data element 602 in, for example, an XML data stream that the data filing system 100 receives.

In case the data element 602 does not comprise personal data, the data filing system 100 may file the data element 602 in the clear. The data filing system 100 may do so by applying a conventional filing process 604. In case the data element 602 does comprise personal data, the data filing system 100 subjects the data element 602 to a time-restricted accessibility process that comprises various steps, which are described hereinafter.

In a key generation step 605, the data filing system 100 generates an encryption key 606 for the data element 602. To that end, the data filing system 100 may systematically activate the key generation module 107 illustrated in FIG. 1 when, in the data assessment step 603, the data element 602 has been found to comprise personal data. The key generation module 107 may comprise, for example, a pseudo random generator that generates a pseudo-random value, which may form the encryption key 606 or at least a portion thereof.

In a key assignment step 607, the data filing system 100 assigns the encryption key 606 that has been generated to the data element 602. In this embodiment, the data filing system 100 has thus randomly assigned the encryption key 606 to the data element 602. Such a random encryption key 606 assignment avoids that the same encryption key 606 has already been assigned to another previously received data element 602 and avoids that the same encryption key 606 will be assigned to another data element 602 yet to be received.

In an identifier association step 608, the data filing system 100 associates an identifier 609 with the data element 602. The data filing system 100 further associates the identifier 609 to the encryption key 606. The identifier 609 may be, for example, a hash that is calculated from the data element 602. The identifier 609 may be uniquely associated with the data element 602 and the encryption key 606. Accordingly, the identifier 609 may uniquely associate the data element 602 with the encryption key 606, and vice versa.

In an expiry date assignment step 610, the data filing system 100 assigns an expiry date 611 to the data element 602. The expiry date 611 is a date after which the data element 602 should no longer be readable from the data filing system 100. In case the data filing system 100 receives the data element 602 in association with an expiry date, as indicated hereinbefore, the data filing system 100 may directly assign that expiry date to the data element 602. In that case, the expiry date 611 that is assigned to the data element may be considered as a run-time defined expiry date.

In other cases, the expiry date 611 may be assigned on the basis of a category to which the data element 602 belongs. A category may concern at least one of the following characteristics: a country to which the data element 602 relates, a type of information that the data element 602 comprises, and an intended use of the data element 602. Thus, there may be different expiry dates for different countries, different expiry dates for different types of information, and different expiry dates for different intended uses.

An expiry date assignment may involve a table of respective expiry delays for respective categories of data elements, such as, for example the expiry delay table 113 illustrated in FIG. 4. In the expiry date assignment step 610, the data filing system 100 may select from this table the expiry delay for the category to which the data element 602 belongs. The data filing system 100 may then define the expiry date 611 on the basis of the expiry delay that has been selected from the table. The expiry date 611 may be a current date to which the expiry delay is added. The data filing system 100 may be provided with the aforementioned table of respective expiry delays in an expiry delay table provision step. This step may be carried out before the date filing session 600 is first carried out. In this case, the expiry date 611 that is assigned to the data element 602 may be considered as a design-time defined expiry date.

In an expiry date update step, the data filing system 100 may update one or more expiry dates that have previously been assigned to other data elements following the expiry date 611 that is presently assigned to the data element 602. For example, let it be assumed that the data element 602 is a link to another data element that has previously been filed in association with another expiry date, which is earlier than the presently assigned expiry date. In case the other, earlier expiry date is maintained, the link will become meaningless after this date while the link itself is still accessible and should preferably function. In order to avoid this, the data filing system 100 may redefine the other, earlier expiry date to become, for example, the presently assigned expiry date.

In a key storage step 612, the data filing system 100 internally stores the encryption key 606 in association with the expiry date 611. For example, the data filing system 100 may store the encryption key 606 and the expiry date 611 in the encryption key table 112 illustrated in FIG. 3. To that end, the data filing system 100 may add a line to this table and write the encryption key 606 and the expiry date 611 in this line, in the middle column 305 and the right-hand column 306, respectively. The data filing system 100 further writes the identifier 609 that is associated with the encryption key 606 in the left-hand column 304 and in the same line.

In a data encryption step 613, the data filing system 100 encrypts the data element 602 on the basis of the encryption key 606. Accordingly, an encrypted data element 614 is obtained. To that end, the data filing system 100 may execute an encryption algorithm that is sufficiently robust and provides satisfactory performance. Various different encryption algorithms may satisfy these requirements. The data filing method may thus be relatively indifferent to the encryption algorithm that is loaded in the data filing system 100 and that is executed.

In a data inclusion step 615, the data filing system 100 includes the encrypted data element 613 in one or more data files of interest. The data filing system 100 may identify a data file of interest, in which the encrypted data element 613 is to be included, on the basis of information associated with the data element 611 that the data filing system 100 has received. For example, the data element 611 may concern an entry in a field for specifying a contacting party in a web page that the data filing system 100 has provided, whereby the web page serves to specify a contract. In this example, the data filing system 100 may store the encrypted data element 613 in a data file that is related to the contract in question. This data file may be in the form of, for example, the data file 109 illustrated in FIG. 2. In this example, the data filing system 100 may add a line to the data file 109 and write the identifier 609 and the encrypted data element 613 in this line, in the left-hand column 204 and the right-hand column 205, respectively.

In the aforementioned example, where the data element 611 specifies a contracting party, the encrypted data element 613 may be an encrypted version of a link to another data element in another data file that constitutes a database of contacting parties comprising respective encrypted data elements defining respective contracting parties in an encrypted form. In case the data element 611 concerns a contracting party that is not yet present in this data file related to contracting parties, the data filing system 100 may include in this date file a new encrypted data element defining the contracting party in question, in an encrypted form. The data filing system 100 may then assign an encryption key and an expiry date to this encrypted data element in a manner as described hereinbefore. The aforementioned expiry date may be the same as the one that has been assigned to the encrypted data element 613 that constitutes a link in the data file related to the contract in question.

In an audit data generation step 616, the data filing system 100 generates audit data 617-620, which relates to the aforementioned steps of filing the data element 602. The audit data 617-620 may comprise an encrypted version 617 of the data element 602 and at least one filing context indication concerning the method of filing applied to the data element 602. The encrypted version 617 of the data element 602 is obtained on the basis of the encryption key 606 that is assigned to the data element 602. The audit data may further comprise, for example, an indication 618 of when the method of filing was applied to the data element 602, an indication 619 of how the data element 602 was received, or an indication 620 of who initiated the method of filing, or any combination of these filing context indications.

The encrypted version 617 of the data element 602 that is included in the audit data 617-620 may correspond with the encrypted data element 613 obtained in the data encryption step 613. As another example, the encrypted version 617 of the data element 602 may be comprised in a portion of the audit data 617-620 that includes the data element 602 and that has been encrypted on the basis of the encryption key 606 that is assigned to the data element 602. That is, the data element 602 may be part of a data package that further includes at least one information element concerning the method of filing applied to the data element 602. The data filing system 100 may then encrypt this data package on the basis of the encryption key 606 that is assigned to the data element 602. The encrypted data package thus obtained may form the audit data 617-620, or at least a portion thereof.

In an audit data recording step 621, the data filing system 100 records the audit data 617-620 in an audit trail record. For example, the data filing system 100 may store the audit data 617-620 in the audit trail record 114 illustrated in FIG. 5. To that end, the data filing system 100 may add a line to the audit trail record 114 and write the audit data 617-620 in this line. The encrypted version 617 of the data element 602 is then written in the left-hand column 504. The filing context indications are written in the left-middle column 505, the right-middle column 506, and the right-hand column 507.

The data filing session 600 illustrated in FIG. 6 may end with the audit data recording step 621. Alternately, the data filing session 600 may continue. In that case, the series of steps illustrated in FIG. 6 may be carried out anew for a new data element to be filed.

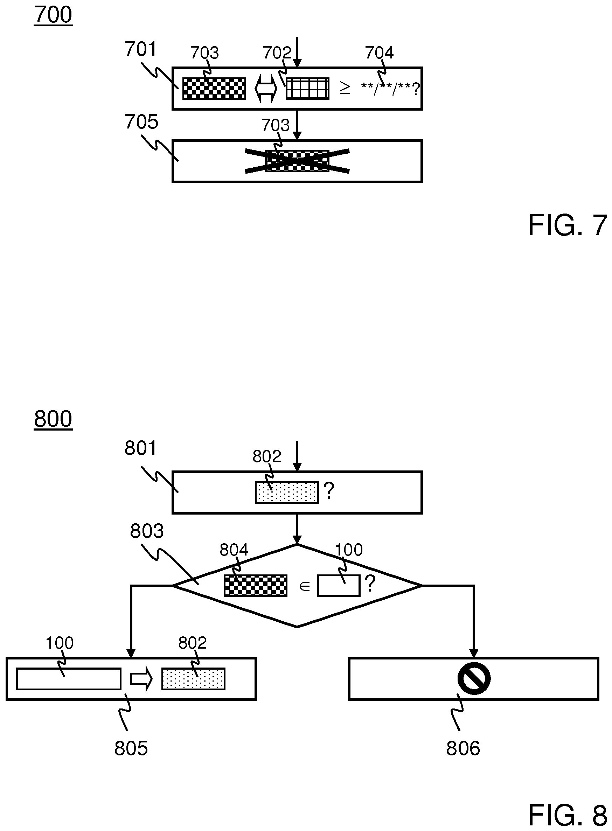

FIG. 7 schematically illustrates a key management process 700 in the method of data filing. The data filing system 100 may regularly carry out the key management process 700. The data filing system 100 may do so by regularly executing the key management module 108 in the program memory 102 illustrated in FIG. 1. The key management process 700 may comprise the following steps.

In an expiry date verification step 701, the data filing system 100 checks respective expiry dates that are associated with respective encryption keys that have been stored. For example, the data filing system 100 may scroll through the right-hand column 306 of the encryption key table 112 illustrated in FIG. 3. In this table, respective expiry dates 313, 314, 315 are stored in association with respective encryption keys 307, 308, 309. While scrolling through the encryption key table 112, the data filing system 100 may compare an expiry date 702, which is associated with an encryption key 703, with a current date 704. If, for example, the expiry date 702 corresponds with the current date 704, or is prior to the current date 704, the data filing system 100 may assess that the expiry date 702 has been reached.

The data filing system 100 carries out a key deletion step 705 for an encryption key 703 that is associated with an expiry date 702 that is reached. In the key deletion step 705, the data filing system 100 deletes the encryption key 703 concerned. For example, let it be assumed that, in the encryption key table 112 illustrated in FIG. 3, a line 303 comprises an encryption key 309 and an identifier 312 and an expiry date 315 associated therewith, whereby the expiry date 315 has been reached. The data filing system 100 may then, for example, delete the encryption key 309 in the line 303 concerned, while keeping the identifier 312 and the expiry date 315 in the line, in the left-hand column 304 and the right-hand column 306, respectively, of the encryption key table 112. These elements associated with the encryption key 309 may provide useful information even after deletion of the encryption key 309.

The data filing system 100 may further carry out a data cleaning step in case the encryption key 703 that has been deleted is associated with an encrypted data element that constitutes a link to another encrypted data element. In the data cleaning step, the data filing system 100 may verify whether the other encrypted data element, to which the link points, is also pointed to by at least one other link, or not. If not, this implies that the other encrypted data element has become disconnected within the data filing system 100 so that there may be no reason anymore to maintain the other encrypted data element. The data filing system 100 may then also delete the encryption key that is associated with the other encrypted data element.

In another embodiment, the data filing system 100 may carry out a specific data cleaning process in which the data filing system 100 verifies whether there are any unconnected encrypted data elements, which do not refer to at least one other data element and which are not referred to by at least one other data element. In case the data filing system 100 identifies an unconnected encrypted data element, the data filing system 100 may then delete the encryption key that is associated with the unconnected data encrypted data element. Accordingly, this process contributes to keeping personal data within the data filing system 100 accessible only for as long as this is necessary, in addition to complying with regulations concerning the right to be forgotten.

The data filing method as described hereinbefore allows filing a data element in such a manner that the data element can be read only up to a certain date, namely an expiry date. The data element can no longer be read after this date, which ensures a right to be forgotten. What is more, this is achieved while ensuring integrity of audit data, even if the audit data comprises contextual information relating to a data element 602 that can no longer be read. The data element, which can no longer be read, can neither be retrieved from the audit data, nor deduced from the audit data. Accordingly, a reliable and comprehensive audit can be carried out notwithstanding the right to be forgotten.

FIG. 8 schematically illustrates data read session 800 in the method of data filing. A remote device that is in communication with the data filing system 100 may initiate the data read session 800. In the data read session 800, the remote device may operate as a client device, while the data filing system 100 operates as server. The data read session 800 may comprise the following steps.

In a read request step 801, the data filing system 100 receives a request for reading a data element 802 from a data file. The request may originate from, for example, the remote device as mentioned hereinbefore. The data filing system 100 may provide a web page that the remote device can display. The web page may comprise a file navigation tool that allows a user of the remote device to select the data file of interest and to designate the data element 802 of interest. It is assumed that the data element 802 to which the request pertains has been filed in a data filing session 600 as described hereinbefore.

In a key examination step 803, the data filing system 100 examines whether the encryption key 804 that has been assigned to the data element 802 is present in the data filing system 100, or not. For example, let it be assumed that the data element 802 requested to be read is a data element 207 in the data file 109 illustrated in FIG. 1. The data filing system 100 may identify the line 202 in which the data element 207 is present. The data filing system 100 may thus retrieve from the left-hand column 204 the identifier 210 that is associated with the data element 207.

Referring to the encryption key table 112 illustrated in FIG. 3, the data filing system 100 may then identify a line 302 in this table that comprises a same identifier 311 in the left-hand column 304. The data filing system 100 may then examine whether there is an element in the middle column 305 in this line 302 of the encryption key table 112. In case there is an element, this element is the encryption key 308 that has been assigned to data element 207. In case there is no element, or only a dummy element, the data filing system 100 can conclude that the encryption key 308 is no longer present.

In a read step 805, which is carried out if the encryption key 804 is present, the data filing system 100 retrieves the encrypted data element from the data file concerned. The data filing system 100 decrypts the encrypted data element so as to obtain the data element 802 in the clear. The data filing system 100 may then communicate the data element 802 to, for example, the remote device that has initiated the read session.

In an indication provision step 806, which is carried out if the encryption key 804 is not present, the data filing system 100 may provide an indication that the data element 802 is present in the data filing system 100, namely in an encrypted form, but can no longer be read. The data filing system 100 may further indicate the expiry date after which the data element 802 had become inaccessible.

In another embodiment, an alternative data filing system may differ from the data filing system 100 described hereinbefore in that the alternative data filing system comprises a basic data filing sub-system and an auditable expiry-monitoring sub-system, which may operate separately on, for example, different servers. The basic data filing sub-system need not keep an inventory of expiry dates and need not monitor whether expiry dates have been reached, or not. In addition, the basic data filing sub-system need not keep audit trails. The basic data filing sub-system delegates these tasks, as it were, to the auditable expiry-monitoring sub-system, which may be in the form of, for example, a web service.

Thus, the basic data filing system need not comprise various data entities that may be present in the data filing system 100 described hereinbefore, such as an encryption key table, an expiry date table, or an the encryption key table described hereinbefore with reference to FIGS. 3, 4, and 5, respectively. Moreover, the basic data filing system need not to carry out a key management process, such as the key management process 700 described hereinbefore with reference to FIG. 7.

The basic data filing system may verify whether a received data element is susceptible to comprise personal data, or not. In case this verification is negative, the basic data filing system may file the received data element in the clear. In case the verification is positive, the basic data filing system may file the received data element in an encrypted form. Insofar as these operations are concerned, as such, the basic data filing system may be similar to the data filing system 100 described hereinbefore. However, there is no need to use unique keys for data element encryption. Alternatively, the basic data filing system may file all received data elements in the clear, or in an encrypted form, without making a distinction between data elements that are susceptible to comprise personal data, and data elements that are not.

The basic data filing system, when receiving and filing a data element sends a copy of the data element to the auditable expiry-monitoring sub-system. The copy of the data element is accompanied by an expiry date indication in case the data element is susceptible to comprise personal data. The expiry data indication may be, for example, an indication of the category to which the data element belongs. As another example, in case the basic data filing system receives the data element in association with an expiry date, or with an expiry date rule to be applied, the expiry data indication may correspond with that expiry date, or with the expiry date rule, respectively. The copy of the data element, which the basic data filing system sends to the auditable expiry-monitoring sub-system, may further be accompanied by an identifier, which the basic data filing system has associated with the data element.

The auditable expiry-monitoring sub-system files the copy of the data element, as well as the identifier associated therewith, if any, in a manner similar to that in which the data filing system 100 described hereinbefore files data elements. Consequently, the auditable expiry-monitoring sub-system may assign an expiry date to the copy of the data element on the basis of the expiry date indication. The auditable expiry-monitoring sub-system may then store this expiry date in association with a unique key that is used to encrypt the copy of the data element, so as to obtain an encrypted version of the data element for storage.

The auditable expiry-monitoring sub-system may thus keep an encryption key table similar to the one described hereinbefore with reference to FIG. 3. In order to assign expiry dates to data elements, the auditable expiry-monitoring sub-system may thus keep an expiry delay table similar to the one described hereinbefore with reference to FIG. 4. In addition, the auditable expiry-monitoring sub-system may keep an audit trail record 114 similar to the one described hereinbefore with reference to FIG. 5.

The auditable expiry-monitoring sub-system may regularly carry out a key management process similar to the key management process 700 described hereinbefore with reference to FIG. 7. In this process, the auditable expiry-monitoring sub-system may thus identify data elements that are associated with an expiry date that has been reached. The auditable expiry-monitoring sub-system may then delete the encryption keys that are associated with the expiry date that has been reached. In this process, the auditable expiry-monitoring sub-system thus also identifies the data elements for which the expiry date has been reached.

The auditable expiry-monitoring sub-system informs the basic data filing system of the data elements for which the expiry date has been reached. To that end, the auditable expiry-monitoring sub-system may establish a communication with the basic data filing system, which may be considered as a call back. In this communication, the auditable expiry-monitoring sub-system may specify the data elements for which the expiry date has been reached directly, or by means of the identifiers associated with these data elements, In response, the basic data filing system deletes the data elements concerned so that these are no longer accessible. The copies of these data elements, which are present in the auditable expiry-monitoring sub-system in an encrypted form, are neither accessible because the encryption keys that have been used for encrypting these have been deleted. The audit trail record of interest is still valid and may be kept, but personal data from which the audit trail record has been generated is no longer accessible.

In this embodiment, several basic data filing systems, which may belong to different organizations, may share, as it were, the same auditable expiry-monitoring sub-system. That is, an auditable expiry-monitoring sub-system may service multiple basic data filing systems, for example, by identifying a basic data filing system from which data element copies are received, and by separately informing the respective basic data filing systems of data elements that have reached an expiry date and should therefore be deleted.

### NOTES

The detailed description hereinbefore with reference to the drawings is provided as an illustration of how the invention may be implemented. The invention may be implemented in numerous different ways. In order to illustrate this, some alternatives are briefly indicated.

The invention may be applied in numerous types of products or methods related to data filing. For example, the invention may be applied in any type of infrastructure that involves data relating to a person who has a right to be forgotten.

The invention may be implemented in numerous manners. For example, there are numerous different ways in which a data filing system may receive a data element to be included in a data file. The detailed description hereinbefore describes an example in which the data filing system receives a data element from a remote device. As another example, the data filing system may receive a data element from a user interface, such as, for example, the user interface illustrated in FIG. 1.

There are numerous different ways of randomly assigning an encryption key to a data element. The detailed description hereinbefore describes an example that involves key generation. As another example, an encryption key may be randomly selected from a pre-established pool of different encryption keys.

There are numerous different ways of defining an expiry date for a data element. The detailed description hereinbefore describes an example that involves an expiry delay table. As another example, the data filing system may define an expiry date for a data element on the basis of data received in association with the data element. This data may have been specified by, for example, a user.

There are numerous different ways of storing an encryption key in association with an expiry date. The detailed description hereinbefore describes an example in which an encryption key and an expiry date are stored in a table. The encryption key and the expiry date are associated with each other if these are in a same line in the table. As other example, an encryption key may be stored in one table and an expiry date associated therewith may be stored in another table. In these respective tables, the encryption key and the expiry date may have a same identifier that associates these with each other.

There are numerous different ways of encrypting a data element on the basis of an encryption key. For example, only a portion of the encryption key may be used for encrypting the data element so as to obtain an encrypted data element that is stored in a data file. Another portion of the encryption key may be used for encrypting the data element so as to obtain an encrypted version of the data element that is included in the audit data.

The term "encryption key" should thus be understood in a broad sense. The term may embrace any form of data, or any set of data, of which at least a portion defines an encryption of a data element.

There are numerous different ways of keeping an audit trail. For example, a single audit trail record may be kept for various data files, or even for all data files that are present in a data filing system in accordance with the invention. That is, several data files may share, as it were, a same audit trail record.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows filing of data in accordance with the invention. For example, software may be stored in a suitable device readable medium, such as, for example, a memory circuit, a magnetic disk, or an optical disk. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A method of data filing comprising:
- a data reception step (601) in which a data filing system (100) receives a data element (602) to be included in a data file (109);
- a data assessment step (603) in which the data filing system determines whether the data element is susceptible to comprise a personal data, or not; the data element being subjected to a time-restricted accessibility process if the data element is susceptible to comprise personal data, the time-restricted accessibility process comprising:
- an expiry date assignment step (610) in which the data filing system assigns an expiry date to the data element;
- a key assignment step (607) in which the data filing system randomly assigns an encryption key (606) to the data element so as to avoid that the encryption key is assigned to another data element in the data filing system;
- a key storage step (612) in which the data filing system internally stores the encryption key in association with the expiry date that has been defined;
- a data encryption step (613) in which the data filing system encrypts the data element on the basis of the encryption key so as to obtain an encrypted data element (614);
- a data inclusion step (615) in which the data filing system includes the encrypted data element in the data file; and
- a key deletion step (705) in which the data filing system deletes the encryption key when the expiry date associated with the encryption key is reached,
the data element being included in the data file without applying the time-restricted accessibility process if the data element is not susceptible to comprise personal data, so that the data element remains accessible as long as the data file remains accessible.

2. A method of data filing according to claim 1, comprising:
- an audit data generation step (616) in which the data filing system (100) generates audit data (617-620), the audit data comprising an encrypted version (617) of the data element (602) and at least one filing context indication (618, 619, 620) concerning the method of filing applied to the data element; the encrypted version of the data element being obtained on the basis of the encryption key (606) that is assigned to the data element; and
- an audit data recording step (621) in which the data filing system records the audit data in an audit trail record (114).

3. A method of data filing according to claim 2, wherein the audit data (617_620) comprises at least one of the following filing context indications: an indication (617) of when the method of filing was applied to the data element, an indication (618) of how the data element was received, and an indication (619) of who initiated the method of filing.

4. A method of data filing according to any of claims 1 to 3, wherein, in the expiry date assignment step (610), the data filing system (100) assigns the expiry date (611) on the basis of a category to which the data element (602) belongs.

5. A method of data filing according to claim 4, comprising:
- an expiry delay table provision step in which the data filing system (100) is provided with a table (113) of respective expiry delays (406, 407, 408) for respective categories of data elements (409, 410, 411), and wherein
- in the expiry date assignment step(610), the data filing system selects from the table the expiry delay for the category to which the data element belongs and assigns the expiry date (611) on the basis of the expiry delay.

6. A method of data filing according to any of claims 4 and 5, wherein a category (409, 410, 411) comprises at least one of the following: a country to which the data element relates, a type of information that the data element comprises, and an intended use of the data element.

7. A method of data filing according to any of claims 1 to 3, wherein, in case the data filing system (100) receives a definition of an expiry date in association with the data element (602), the data filing system (100) assigns the expiry date (611) on the basis of this definition.

8. A method of data filing according to any of claims 1 to 7, comprising:
- an expiry date verification step (701) in which the data filing system (100) checks respective expiry dates (313, 314, 315) that are associated with respective encryption keys (307, 308, 309) that have been stored, the key deletion step (705) being carried out for an encryption key (703) that is associated with an expiry date (702) that is reached,
and wherein the data filing system regularly carries out the expiry date verification step.

9. A method of data filing according to any of claims 1 to 8, comprising:
- an identifier association step (608) in which the data filing system (100) associates an identifier (609) with the data element (602) and associates the identifier with the encryption key (606).

10. A method of data filing according to claim 9, wherein the identifier (609) is a hash calculated from the data element (602).

11. A method of data filing according to any of claims 1 to 10, comprising:
- a key generation step (605) in which the data filing system (100) generates the encryption key (606) by means of a pseudo random generator upon the data reception step (601).

12. A method of data filing according to any of claims 1 to 11, comprising:
- a data cleaning step in which the data filing system (100) verifies whether an encrypted data element has a connection with another data element, or not, and in which the data filing system deletes the encryption key that is associated with the encrypted data element if the encrypted data element has no connection, the encryption key being maintained if the encrypted data element has at least one connection.

13. A method of data filing according to any of claims 1 to 12, comprising:
- a read request step (801) in which the data filing system (100) receives a request for reading the data element (802) from the data file;
- a key examination step (803) in which the data filing system examines whether the encryption key (804) that has been assigned to the data element is present in the data filing system, or not;
- a read step (805), which is carried out if the encryption key is present, wherein the data filing system retrieves the encrypted data element from the data file and wherein the data filing system decrypts the encrypted data element so as to obtain the data element in the clear; and
- an indication provision step (806), which is carried out if the encryption key is not present, wherein the data filing system provides an indication that the data element is present in the data file but can no longer be read.

14. A computer program (106) comprising a set of instructions that enables a processor (101) within a data filing system (100) to carry out the method according to any of claims 1 to 13.

15. A data filing system (100) adapted to carry out the method according to any of claims 1 to 13.

## Patentansprüche

1. Verfahren zur Datenarchivierung, umfassend:
- einen Datenempfangsschritt (601), bei dem ein Datenarchivierungssystem (100) ein Datenelement (602) empfängt, das in ein Datenarchiv (109) einzuschließen ist;
- einen Datenbewertungsschritt (603), bei dem das Datenarchivierungssystem bestimmt, ob das Datenelement personenbezogene Daten umfassen könnte, oder nicht; wobei das Datenelement einem Zugänglichkeitsprozess auf beschränkte Zeit unterzogen wird, falls das Datenelement personenbezogene Daten umfassen könnte, wobei der Zugänglichkeitsprozess auf beschränkte Zeit Folgendes umfasst:
- einen Ablaufdatumszuweisungsschritt (610), bei dem das Datenarchivierungssystem dem Datenelement ein Ablaufdatum zuweist;
- einen Schlüsselzuweisungsschritt (607), bei dem das Datenarchivierungssystem dem Datenelement zufällig einen Verschlüsselungsschlüssel (606) zuweist, um zu vermeiden, dass der Verschlüsselungsschlüssel einem anderen Datenelement in dem Datenarchivierungssystem zugewiesen wird;
- einen Schlüsselspeicherschritt (612), bei dem das Datenarchivierungssystem den Verschlüsselungsschlüssel in Verbindung mit dem Ablaufdatum, das definiert worden ist, intern speichert;
- einen Datenverschlüsselungsschritt (613), bei dem das Datenarchivierungssystem das Datenelement auf der Basis des Verschlüsselungsschlüssels verschlüsselt, um ein verschlüsseltes Datenelement (614) zu erhalten;
- einen Dateneinschlussschritt (615), bei dem das Datenarchivierungssystem das verschlüsselte Datenelement in das Datenarchiv einschließt; und
- einen Schlüssellöschschritt (705), bei dem das Datenarchivierungssystem den Verschlüsselungsschlüssel löscht, wenn das Ablaufdatum, das mit dem Verschlüsselungsschlüssel verbunden ist, erreicht wird, wobei das Datenelement in dem Datenarchiv ohne Anwendung des Zugänglichkeitsprozesses auf beschränkte Zeit eingeschlossen wird, falls das Datenelement keine personenbezogenen Daten umfassen könnte, sodass das Datenelement solange zugänglich bleibt, wie das Datenarchiv zugänglich bleibt.

2. Verfahren zur Datenarchivierung nach Anspruch 1, umfassend:
- einen Audit-Datenerzeugungsschritt (616), bei dem das Datenarchivierungssystem (100) Audit-Daten (617-620) erzeugt, wobei die Audit-Daten eine verschlüsselte Version (617) des Datenelements (602) und mindestens einen Archivierungskontexthinweis (618, 619, 620) betreffend das Archivierungsverfahren umfasst, das auf das Datenelement angewandt wird; wobei die verschlüsselte Version des Datenelements auf der Basis des Verschlüsselungsschlüssels (606) erhalten wird, der dem Datenelement zugewiesen wird;
und
- einen Audit-Datenaufzeichnungsschritt (621), bei dem das Datenarchivierungssystem die Audit-Daten in einem Audit-Pfaddatensatz (114) aufzeichnet.

3. Verfahren zur Datenarchivierung nach Anspruch 2, wobei die Audit-Daten (617-620) mindestens eine der folgenden Archivierungskontexthinweise umfassen: einen Hinweis (617) darauf, wann das Archivierungsverfahren auf das Datenelement angewandt wurde, einen Hinweis (618) darauf, wie das Datenelement empfangen wurde, und einen Hinweis (619) darauf, wer das Archivierungsverfahren initiiert hat.

4. Verfahren zur Datenarchivierung nach einem der Ansprüche 1 bis 3, wobei das Datenarchivierungssystem (100) bei dem Ablaufdatumszuweisungsschritt (610) das Ablaufdatum (611) auf der Basis einer Kategorie zuweist, der das Datenelement (602) angehört.

5. Verfahren zur Datenarchivierung nach Anspruch 4, umfassend:
- einen Schritt zur Bereitstellung einer Ablauffristentabelle, wobei dem Datenarchivierungssystem (100) eine Tabelle (113) mit jeweiligen Ablauffristen (406, 407, 408) für jeweilige Kategorien von Datenelementen (409, 410, 411) bereitgestellt wird, und wobei
- bei dem Ablaufdatumszuweisungsschritt (610) das Datenarchivierungssystem aus der Tabelle die Ablauffrist für die Kategorie auswählt, der das Datenelement angehört und das Ablaufdatum (611) auf der Basis der Ablauffrist zuweist.

6. Verfahren zur Datenarchivierung nach einem der Ansprüche 4 und 5, wobei eine Kategorie (409, 410, 411) mindestens eines von Folgendem umfasst: ein Land, auf das sich das Datenelement bezieht, eine Informationsart, die das Datenelement umfasst, und eine bestimmte Verwendung des Datenelements.

7. Verfahren zur Datenarchivierung nach einem der Ansprüche 1 bis 3, wobei in einem Fall, in dem das Datenarchivierungssystem (100) eine Definition eines Ablaufdatums in Verbindung mit dem Datenelement (602) empfängt, das Datenarchivierungssystem (100) das Ablaufdatum (611) auf der Basis dieser Definition zuweist.

8. Verfahren zur Datenarchivierung nach einem der Ansprüche 1 bis 7, umfassend:
- einen Ablaufdatumsüberprüfungsschritt (701), bei dem das Datenarchivierungssystem (100) entsprechende Ablaufdaten (313, 314, 315), die mit entsprechenden Verschlüsselungsschlüsseln (307, 308, 309) verbunden sind, die gespeichert worden sind, prüft, wobei der Schlüssellöschschritt (705) bei einem Verschlüsselungsschlüssel (703) ausgeführt wird, der mit einem Ablaufdatum (702) verbunden ist, das erreicht ist,
und wobei das Datenarchivierungssystem den Ablaufdatumsüberprüfungsschritt regelmäßig ausführt.

9. Verfahren zur Datenarchivierung nach einem der Ansprüche 1 bis 8, umfassend:
- einen Kennungsverbindungsschritt (608), bei dem das Datenarchivierungssystem (100) eine Kennung (609) mit dem Datenelement (602) verbindet und die Kennung mit dem Verschlüsselungsschlüssel (606) verbindet.

10. Verfahren zur Datenarchivierung nach Anspruch 9, wobei die Kennung (609) ein aus dem Datenelement (602) berechneter Hash ist.

11. Verfahren zur Datenarchivierung nach einem der Ansprüche 1 bis 10, umfassend:
- einen Schlüsselerzeugungsschritt (605), bei dem das Datenarchivierungssystem (100) den Verschlüsselungsschlüssel (606) anhand eines Pseudozufallsgenerators beim Datenempfangsschritt (601) erzeugt.

12. Verfahren zur Datenarchivierung nach einem der Ansprüche 1 bis 11, umfassend:
- einen Datenreinigungsschritt, bei dem das Datenarchivierungssystem (100) überprüft, ob ein verschlüsseltes Datenelement einen Zusammenhang mit einem anderen Datenelement aufweist oder nicht, und bei dem das Datenarchivierungssystem den Verschlüsselungsschlüssel löscht, der mit dem verschlüsselten Datenelement verbunden ist, falls das verschlüsselte Datenelement keinen Zusammenhang aufweist, wobei der Verschlüsselungsschlüssel beibehalten wird, falls das verschlüsselte Datenelement mindestens einen Zusammenhang aufweist.

13. Verfahren zur Datenarchivierung nach einem der Ansprüche 1 bis 12, umfassend:
- einen Leseanforderungsschritt (801), bei dem das Datenarchivierungssystem (100) eine Anfrage zum Lesen des Datenelements (802) aus dem Datenarchiv empfängt;
- einen Schlüsseluntersuchungsschritt (803), bei dem das Datenarchivierungssystem untersucht, ob der Verschlüsselungsschlüssel (804), der dem Datenelement zugewiesen worden ist, in dem Datenarchivierungssystem vorhanden ist oder nicht;
- einen Leseschritt (805), der ausgeführt wird, falls der Verschlüsselungsschlüssel vorhanden ist, wobei das Datenarchivierungssystem das verschlüsselte Datenelement aus dem Datenarchiv abruft, und bei dem das Datenarchivierungssystem das verschlüsselte Datenelement entschlüsselt, um das Datenelement in verständlicher Form zu erhalten; und
- einen Hinweisbereitstellungsschritt (806), der ausgeführt wird, falls der Verschlüsselungsschlüssel nicht vorhanden ist, wobei das Datenarchivierungssystem einen Hinweis bereitstellt, dass das Datenelement in dem Datenarchiv vorhanden ist, jedoch nicht länger gelesen werden kann.

14. Computerprogramm (106), umfassend eine Reihe von Anweisungen, die es einem Prozessor (101) innerhalb eines Datenarchivierungssystems (100) ermöglichen, das Verfahren nach einem der Ansprüche 1 bis 13 auszuführen.

15. Datenarchivierungssystem (100), das angepasst ist, um das Verfahren nach einem der Ansprüche 1 bis 13 auszuführen.

## Revendications

1. Procédé d'archivage de données comprenant :
- une étape de réception de données (601) dans laquelle un système d'archivage de données (100) reçoit un élément de données (602) à inclure dans un fichier de données (109) ;
- une étape d'évaluation de données (603) dans laquelle le système d'archivage de données détermine si l'élément de données est susceptible de comprendre une donnée personnelle, ou non ; l'élément de données étant soumis à un processus d'accessibilité limitée dans le temps si l'élément de données est susceptible de comprendre des données personnelles, le processus d'accessibilité limitée dans le temps comprenant :
- une étape d'attribution d'une date d'expiration (610) dans laquelle le système d'archivage de données attribue une date d'expiration à l'élément de données ;
- une étape d'attribution de clé (607) dans laquelle le système d'archivage de données attribue aléatoirement une clé de chiffrement (606) à l'élément de données de façon à éviter que la clé de chiffrement ne soit attribuée à un autre élément de données dans le système d'archivage de données ;
- une étape de stockage de clé (612) dans laquelle le système d'archivage de données stocke en interne la clé de chiffrement en association avec la date d'expiration qui a été définie ;
- une étape de chiffrement de données (613) dans laquelle le système d'archivage de données chiffre l'élément de données sur la base de la clé de chiffrement de façon à obtenir un élément de données chiffré (614) ;
- une étape d'inclusion de données (615) dans laquelle le système d'archivage de données inclut l'élément de données chiffré dans le fichier de données ; et
- une étape de suppression de clé (705) dans laquelle le système d'archivage de données supprime la clé de chiffrement lorsque la date d'expiration associée à la clé de chiffrement est atteinte,
l'élément de données étant inclus dans le fichier de données sans appliquer le processus d'accessibilité limitée dans le temps si l'élément de données n'est pas susceptible de comprendre de données personnelles de sorte que l'élément de données reste accessible aussi longtemps que le fichier de données reste accessible.

2. Procédé d'archivage de données selon la revendication 1, comprenant :
- une étape de génération de données d'audit (616) dans laquelle le système d'archivage de données (100) génère des données d'audit (617-620), les données d'audit comprenant une version chiffrée (617) de l'élément de données (602) et au moins une indication de contexte d'archivage (618, 619, 620) concernant le procédé d'archivage appliqué à l'élément de données ; la version chiffrée de l'élément de données étant obtenue sur la base de la clé de chiffrement (606) qui est attribuée à l'élément de données ; et
- une étape d'enregistrement de données d'audit (621) dans laquelle le système d'archivage de données enregistre les données d'audit dans un enregistrement de piste d'audit (114).

3. Procédé d'archivage de données selon la revendication 2, dans lequel les données d'audit (617-620) comprennent au moins une des indications de contexte d'archivage suivantes : une indication (617) indiquant quand le procédé d'archivage a été appliqué à l'élément de données, une indication (618) indiquant comment l'élément de données a été reçu et une indication (619) indiquant qui a initié le procédé d'archivage.

4. Procédé d'archivage de données selon l'une quelconque des revendications 1 à 3, dans lequel, dans l'étape d'attribution de la date d'expiration (610), le système d'archivage de données (100) attribue la date d'expiration (611) sur la base d'une catégorie à laquelle l'élément de données (602) appartient.

5. Procédé d'archivage de données selon la revendication 4, comprenant :
- une étape de fourniture de table de retards d'expiration dans laquelle le système d'archivage de données (100) se voit fournir une table (113) de retards d'expiration respectifs (406, 407, 408) pour des catégories respectives d'éléments de données (409, 410, 411), et dans lequel
- dans l'étape d'attribution de date d'expiration (610), le système d'archivage de données sélectionne dans la table le retard d'expiration pour la catégorie à laquelle l'élément de données appartient et attribue la date d'expiration (611) sur la base du retard d'expiration.

6. Procédé d'archivage de données selon l'une quelconque des revendications 4 et 5, dans lequel une catégorie (409, 410, 411) comprend au moins un de ce qui suit : un pays auquel l'élément de données se rapporte, un type d'information que l'élément de données comprend et une utilisation envisagée de l'élément de données.

7. Procédé d'archivage de données selon l'une quelconque des revendications 1 à 3, dans lequel, dans le cas où le système d'archivage de données (100) reçoit une définition d'une date d'expiration en association avec l'élément de données (602), le système d'archivage de données (100) attribue la date d'expiration (611) sur la base de cette définition.

8. Procédé d'archivage de données selon l'une quelconque des revendications 1 à 7, comprenant :
- une étape de vérification de date d'expiration (701) dans laquelle le système d'archivage de données (100) contrôle des dates d'expiration respectives (313, 314, 315) qui sont associées à des clés de chiffrement respectives (307, 308, 309) qui ont été stockées, l'étape de suppression de clé (705) étant effectuée pour une clé de chiffrement (703) qui est associée avec une date d'expiration (702) qui est atteinte,
et dans lequel le système d'archivage de données effectue régulièrement l'étape de vérification de date d'expiration.

9. Procédé d'archivage de données selon l'une quelconque des revendications 1 à 8, comprenant :
- une étape d'association d'identifiant (608) dans laquelle le système d'archivage de données (100) associe un identifiant (609) à l'élément de données (602) et associe l'identifiant à la clé de chiffrement (606).

10. Procédé d'archivage de données selon la revendication 9, dans lequel l'identifiant (609) est un hachage calculé à partir de l'élément de données (602).

11. Procédé d'archivage de données selon l'une quelconque des revendications 1 à 10, comprenant :
- une étape de génération de clé (605) dans laquelle le système d'archivage de données (100) génère la clé de chiffrement (606) au moyen d'un générateur pseudo-aléatoire lors de l'étape de réception de données (601).

12. Procédé d'archivage de données selon l'une quelconque des revendications 1 à 11, comprenant :
- une étape de nettoyage de données dans laquelle le système d'archivage de données (100) vérifie si un élément de données chiffré a ou non une connexion à un autre élément de données, et dans laquelle le système d'archivage de données supprime la clé de chiffrement qui est associée avec l'élément de données chiffré si l'élément de données chiffré n'a pas de connexion, la clé de chiffrement étant maintenue si l'élément de données chiffré a au moins une connexion.

13. Procédé d'archivage de données selon l'une quelconque des revendications 1 à 12, comprenant :
- une étape de demande de lecture (801) dans laquelle le système d'archivage de données (100) reçoit une demande de lecture de l'élément de données (802) dans le fichier de données ;
- une étape d'examen de clé (803) dans laquelle le système d'archivage de données examine si la clé de chiffrement (804), qui a été attribuée à l'élément de données, est présente ou non dans le système d'archivage de données ;
- une étape de lecture (805), qui est effectuée si la clé de chiffrement est présente, dans lequel le système d'archivage de données récupère l'élément de données chiffré dans le fichier de données et dans lequel le système d'archivage de données déchiffre l'élément de données chiffré de façon à obtenir l'élément de données en clair ; et
- une étape de fourniture d'indication (806), qui est effectuée si la clé de chiffrement n'est pas présente, dans lequel le système d'archivage de données fournit une indication indiquant que l'élément de données est présent dans le fichier de données, mais ne peut plus être lu.

14. Programme d'ordinateur (106) comprenant un ensemble d'instructions qui permet à un processeur (101) à l'intérieur d'un système d'archivage de données (100) d'effectuer le procédé selon l'une quelconque des revendications 1 à 13.

15. Système d'archivage de données (100) adapté pour effectuer le procédé selon l'une quelconque des revendications 1 à 13.
